# EUROPEAN PATENT APPLICATION

(11) **EP 4 748 517 A1**
(43) Date of publication of application: **27.05.2026**
(21) Application number: 25211345.1
(22) Date of filing: 27.10.2025
(51) Int. Cl.: B22F 10/28, B22F 10/85, B22F 12/90, B29C 64/393, B33Y 30/00, B33Y 50/02, G01N 21/88

(54) **HIGH RESOLUTION IMAGING PROCESS MONITORING SYSTEM FOR ADDITIVE MANUFACTURING**

(30) Priority: 18.11.2024 US 202418950975
(71) Applicant: General Electric Company, Evendale, Ohio 45215 (US)
(72) Inventor: OSTROVERKHOV, Victor, Niskayuna, NY 12309-1027 (US); KENNY, Kevin B., Niskayuna, NY 12309-1027 (US); CHEVERTON, Mark A., Niskayuna, NY 12309-1027 (US); ADCOCK, Thomas C., Niskayuna, NY 12309-1027 (US)
(74) Representative: Hafner & Kohl PartmbB

(57) **Abstract**

A system (100) includes an apparatus (130) for building a component by additive manufacturing, a camera (136), an adjustable optical attenuator (144), and a computing device (156). When the computing device (156) receives a signal indicating that a layer of particulate has been deposited onto a build plane (112), the attenuator (144) adjusts the attenuation level of the camera (136) to a low attenuation level, and the camera (136) captures a pre-weld image. When the computing device (156) receives a signal indicating a start of exposure of a layer of the component (134) to an energy beam (132), the attenuator (144) adjusts the attenuation level of the camera (136) to a high attenuation level, and the camera (136) captures an in-weld image. When the computing device (156) receives a signal indicating an end of exposure of the layer of the component (134) to the energy beam (132), the attenuator (144) adjusts the attenuation level of the camera (136) to the low attenuation level, and the camera (136) captures a post-weld image.

## Description

### FIELD

The present disclosure relates to additive manufacturing, and more specifically, to a high resolution imaging process monitoring system for additive manufacturing.

### BACKGROUND

At least some additive manufacturing systems involve the buildup of a metal component to make a net, or near net shape component. These systems produce complex components from expensive materials at a reduced cost and with improved manufacturing efficiency. Some known additive manufacturing systems, such as Direct Metal Laser Melting (DMLM), Selective Laser Sintering (SLS), Direct Metal Laser Sintering (DMLS), Selective Laser Melting (SLM) and LaserCusing^{®} systems, fabricate components using a focused energy source, such as a laser device or an electron beam generator, and a particulate, such as a powdered metal.

In some known additive manufacturing systems, component quality is reduced due to excess heat and/or variation in heat being transferred to the metal powder by the focused energy source within the melt pool. For example, sometimes local overheating occurs, particularly at overhangs. In addition, in some known additive manufacturing systems, component surface quality, particularly at overhangs or downward facing surfaces, is reduced due to the variation in conductive heat transfer between the powdered metal and the surrounding solid material of the component. For example, the melt pool produced by the focused energy source sometimes becomes too large resulting in the melted metal spreading into the surrounding powdered metal as well as the melt pool penetrating deeper into the powder bed, pulling in additional powder into the melt pool. The increased melt pool size and depth, and the flow of molten metal result in a poor surface finish of the overhang or downward facing surface.

In addition, in some known additive manufacturing systems, the component's dimensional accuracy and small feature resolution is reduced due to melt pool variations because of the variability of thermal conductivity of the subsurface structures and metallic powder. As the melt pool size varies, the accuracy of printed structures varies, especially at the edges of features.

### BRIEF DESCRIPTION OF THE DRAWINGS

FIG. 1 schematically depicts an example additive manufacturing system including an example imaging device, according to one or more embodiments shown and described herein;
FIG. 2 schematically depicts the memory modules of the computing device of FIG. 1, according to one or more embodiments shown and described herein;
FIG. 3 depicts an example image that may be captured by the imaging device of FIG. 1, according to one or more embodiments shown and described herein;
FIG. 4 depicts a composite in-weld image that may be generated by the imaging device of FIG. 1, according to one or more embodiments shown and described herein; and
FIG. 5 depicts a flow diagram of an illustrative method for operating the computing device of FIG. 1, according to one or more embodiments shown and described herein.

### DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the scope of the disclosure as claimed.

Various embodiments are discussed in detail below. While specific embodiments are discussed, this is done for illustration purposes only. A person skilled in the relevant art will recognize that other components and configurations may be used without departing from the present disclosure.

As used herein, the terms "first," "second," "third," and the like, may be used interchangeably to distinguish one component from another and are not intended to signify location or importance of the individual components.

The term "coupled" refers to both direct coupling, fixing, attaching, or connecting, as well as indirect coupling, fixing, attaching, or connecting through one or more intermediate components or features, unless otherwise specified herein.

The singular forms "a," "an," and "the" include plural references unless the context clearly dictates otherwise.

As used herein, the term "field of view" refers to the extent of an object that is captured in an image.

Approximating language, as used herein throughout the specification and claims, is applied to modify any quantitative representation that could permissibly vary without resulting in a change in the basic function to which it is related. Accordingly, a value modified by a term or terms, such as "about," "approximately," and "substantially" is not to be limited to the precise value specified. In at least some instances, the approximating language may correspond to the precision of an instrument for measuring the value, or the precision of the methods or the machines for constructing or manufacturing the components and/or systems. For example, the approximating language may refer to being within a one, two, four, ten, fifteen, or twenty percent margin in either individual values, range(s) of values, and/or endpoints defining range(s) of values.

Here and throughout the specification and claims, range limitations are combined and interchanged. Such ranges are identified and include all the sub-ranges contained therein unless context or language indicates otherwise. For example, all ranges disclosed herein are inclusive of the endpoints, and the endpoints are independently combinable with each other.

The systems and methods described herein relate to additive manufacturing systems, such as Direct Metal Laser Melting (DMLM) systems. The embodiments described herein include a focused energy source and an imaging device. During operation of the focused energy source, the imaging device may continually capture a video stream of images at a relatively high frame rate. During each exposure, a part of the melt pool trajectory may be captured. After capturing a plurality of images during the build of an entire layer, the images may be stacked together to generate a composite image frame for the layer, as disclosed herein. The composite image illustrates intensity of light emitted throughout the melt pool. The composite image may be inspected to determine variations and defects in the additive manufacturing process. As a result, errors in the additive manufacturing process may be corrected and the process may be improved. In some embodiments, the composite image may be used in a feed-forward process to improve the manufacturing of subsequent components.

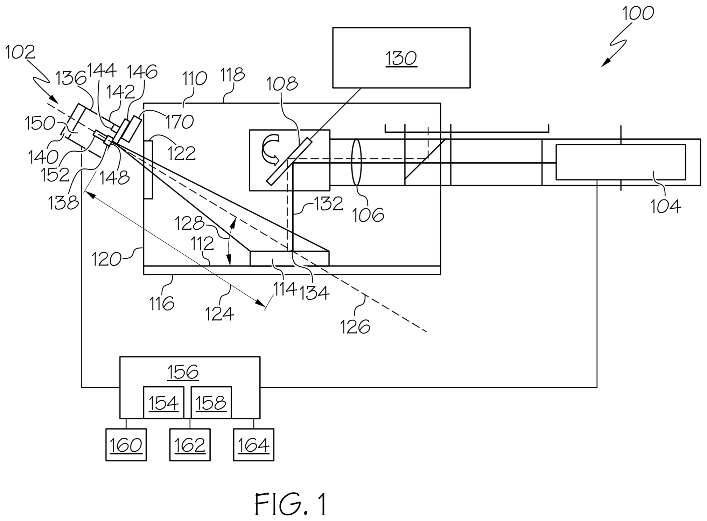

FIG. 1 is a schematic view of an exemplary additive manufacturing system 100 including an imaging device 102. In the exemplary embodiment, the additive manufacturing system 100 is a direct metal laser melting (DMLM) system. The additive manufacturing system 100 further includes a focused energy source 104 optically coupled to optics 106 and galvanometers 108 for controlling the scanning of focused energy source 104. In the exemplary embodiment, the focused energy source 104 is a laser device. In alternative embodiments, the additive manufacturing system 100 may include any focused energy sources 104 that enable the additive manufacturing system 100 to operate as described herein. For example, in some embodiments, the additive manufacturing system 100 has a first focused energy source 104 having a first power and a second focused energy source 104 having a second power different from the first power. In further embodiments, the additive manufacturing system 100 has at least two focused energy sources 104 having substantially the same power output. In further embodiments, the additive manufacturing system 100 includes at least one focused energy source 104 that is an electron beam generator.

In the exemplary embodiment, the additive manufacturing system 100 further includes a housing 110 defining a build plane 112 configured to hold a particulate 114. The housing 110 includes a bottom wall 116 defining the build plane 112, a top wall 118 opposite bottom wall 116, and a sidewall 120 at least partially extending between bottom wall 116 and top wall 118. In alternative embodiments, the housing 110 includes any walls and surfaces that enable the additive manufacturing system 100 to operate as described herein. In the exemplary embodiment, the sidewall 120 defines a viewport 122 therein. In alternative embodiments, the viewport 122 is defined by any portion of the housing 110 that enables the additive manufacturing system 100 to operate as described herein. For example, in some embodiments, the viewport 122 is at least partially defined by the top wall 118. In further embodiments, the housing 110 defines a plurality of viewports 122.

In the exemplary embodiment, the imaging device 102 is positioned adjacent the viewport 122 on an exterior of the housing 110. An image axis 126 extends between the imaging device 102 and particulate 114 on the build plane 112. Accordingly, in the exemplary embodiment, the image axis 126 extends through the viewport 122. The imaging device 102 is spaced a distance 124 from the build plane 112 measured along the image axis 126. In particular, the image axis 126 extends through an aperture 148 of the imaging device 102. In some embodiments, the distance 124 is in a range of 15 centimeters (cm) (6 inches (in.)) and about 152 cm (60 in.). In further embodiments, the distance 124 is in a range of 30 cm (12 in.) and about 91 mm (36 in.). In the exemplary embodiment, the distance 124 is approximately 61 cm (24 in.) In alternative embodiments, the imaging device 102 is spaced any distance 124 from the build plane 112 that enables the imaging device 102 to operate as described herein. In the exemplary embodiment, the image axis 126 forms an angle 128 with the build plane 112. In some embodiments, the image axis 126 and the build plane 112 form an angle 128 in a range of 70° and about 40°. In further embodiments, the image axis 126 and the build plane 112 form an angle 128 in a range of 80° and about 20°. In the exemplary embodiment, the image axis 126 and the build plane 112 form an angle 128 of approximately 45°. In alternative embodiments, the angle 128 is any angle that enables the imaging device 102 to operate as described herein.

In the exemplary embodiment, the field of view of the imaging device 102 is in reference to the build plane 112 and depends on the position and orientation of the imaging device 102 in relation to the build plane 112. The field of view of the imaging device 102 may be adjusted by adjusting components of the imaging device 102, such as optics, and the distance 124 between the build plane 112 and the imaging device 102. In the exemplary embodiment, the imaging device 102 has a field of view of the build plane 112 of approximately 250 millimeters (mm)×250 mm. In alternative embodiments, the imaging device 102 may have any field of view that enables the imaging device 102 to operate as described herein. For example, in some embodiments, the imaging device 102 is disposed adjacent the top wall 118 and has a field of view of the build plane 112 of approximately 250 mm×280 mm. In further embodiments, a plurality of imaging devices 102 are used to a create a field of view sufficient to cover a larger build plane 112 without substantially reducing resolution.

In the exemplary embodiment, the additive manufacturing system 100 also includes a computer control system, or electronic control unit (ECU) 130. Galvanometers 108 are controlled by the ECU 130 and deflect an energy beam 132 (e.g., a laser beam) from focused energy source 104 along a predetermined path on the build plane 112. In some embodiments, the galvanometers 108 include two-dimension (2D) scan galvanometers, three-dimension (3D) scan galvanometers, dynamic focusing galvanometers, and/or any other galvanometer system that deflect the energy beam 132 of focused energy source 104. In alternative embodiments, the galvanometers 108 deflect a plurality of energy beams 132 along at least one predetermined path.

The additive manufacturing system 100 is operated to fabricate a component 134 by a layer-by-layer manufacturing process. The component 134 is fabricated from an electronic representation of the 3D geometry of the component 134. In some embodiments, the electronic representation is produced in a computer aided design (CAD) or similar file. In alternative embodiments, the electronic representation is any electronic representation that enables the additive manufacturing system 100 to operate as described herein. In the exemplary embodiment, the CAD file of the component 134 is converted into a layer-by-layer format that includes a plurality of build parameters for each layer. In the exemplary embodiment, the component 134 is arranged electronically in a desired orientation relative to the origin of the coordinate system used in the additive manufacturing system 100. The geometry of the component 134 is sliced into a stack of layers of a desired thickness, such that the geometry of each layer is an outline of the cross-section through the component 134 at that particular layer location. A "toolpath" or "toolpaths" are generated across the geometry of a respective layer. The build parameters are applied along the toolpath or toolpaths to fabricate that layer of the component 134 from the material used to construct the component 134. The steps are repeated for each respective layer of the component 134 geometry. Once the process is completed, an electronic computer build file (or files) is generated including the layers. The build file is loaded into the ECU 130 of the additive manufacturing system 100 to control the system during fabrication of each layer.

After the build file is loaded into the ECU 130, the additive manufacturing system 100 is operated to generate the component 134 by implementing the layer-by-layer manufacturing process, such as a DMLM method. The exemplary layer-by-layer additive manufacturing process does not use a pre-existing article as the precursor to the final component, rather the process produces the component 134 from a raw material in a configurable form, such as the particulate 114. For example, without limitation, a steel component is additively manufactured using a steel powder. The additive manufacturing system 100 enables fabrication of components using a broad range of materials, for example, without limitation, metals, ceramics, and polymers. In alternative embodiments, DMLM fabricates components from any materials that enable the additive manufacturing system 100 to operate as described herein.

As used herein, the term "parameter" refers to characteristics that are used to define the operating conditions of the additive manufacturing system 100, such as a power output of the focused energy source 104, a vector scanning speed of the focused energy source 104, a raster power output of the focused energy source 104, a raster scanning speed of the focused energy source 104, a raster tool path of the focused energy source 104, and a contour power output of the focused energy source 104 within the additive manufacturing system 100. In some embodiments, the parameters are initially input by a user into the ECU 130. The parameters represent a given operating state of the additive manufacturing system 100. In general, during raster scanning, the energy beam 132 is scanned sequentially along a series of substantially straight lines spaced apart and parallel to each other. During vector scanning, the energy beam 132 is generally scanned sequentially along a series of substantially straight lines or vectors, where the orientations of the vectors relative to each other sometimes varies. In general, the ending point of one vector coincides with the beginning point of the next vector. Vector scanning is generally used to define the outer contours of a component, whereas raster scanning is generally used to "fill" the spaces enclosed by the contour, where the component is solid.

In the exemplary embodiment, the imaging device 102 includes a camera 136 including a tilt-shift lens 138, a sensor 140, a casing 142, an adjustable optical attenuator 144, and a shutter 146. In the illustrated example, the camera 136 comprises a complementary metal-oxide-semiconductor (CMOS) camera. However, in other examples, other types of camera may be used. The casing 142 defines the aperture 148 for light to enter an interior space 150 defined by the casing 142. The tilt-shift lens 138, the adjustable optical attenuator 144, and the shutter 146 are disposed adjacent the aperture 148. The tilt-shift lens 138 directs and focuses light onto the sensor 140, which is disposed in the interior space 150. The tilt-shift lens 138 may improve the sharpness of images captured by the camera 136 and optimize lens performance and focus condition at an oblique incidence. The adjustable optical attenuator 144 changes the light collecting efficiency of the camera 136, as disclosed in further detail below. In alternative embodiments, the camera 136 may include any components that enable the imaging device 102 to operate as described herein. In some examples, a fixed attenuator may be used rather than the adjustable optical attenuator 144.

In embodiments, the shutter 146 is positionable between an open position that allows light to travel through the aperture 148 and a closed position that inhibits light traveling through the aperture 148. In embodiments, the imaging device 102 includes a light source 152 to illuminate the build plane. In the illustrated example, the light source 152 is a light-emitting diode (LED). However, in other examples, other types of light sources may be used to illuminate the build plane 112. In particular, the light source 152 may illuminate the build plane 112 at the start of a build layer so that the camera 136 can capture a pre-weld image before the energy beam 132 is emitted from the focused energy source 104. The light source 152 may also illuminate the build plane 112 at the end of a build layer after the energy beam 132 from the focused energy source 104 is turned off so that the camera 136 can capture a post-weld image.

During operation of the imaging device 102, the shutter 146 is positioned in the open position such that light is allowed to travel through the aperture 148 and strike the sensor 140. The light activates the sensor 140 and is converted to electronic signals. In the exemplary embodiment, the sensor 140 includes a plurality of pixels (not shown) that are activated by light. In alternative embodiments, the sensor 140 is any sensor that enables the imaging device 102 to operate as described herein. In the exemplary embodiment, the image is transmitted to a processor 154 coupled to camera 136. In some embodiments, the processor 154 is configured to recognize differences in light intensity in the image.

In the exemplary embodiment, the ECU 130 is any controller typically provided by a manufacturer of the additive manufacturing system 100 to control operation of the additive manufacturing system 100. In some embodiments, the ECU 130 is a computer system that includes at least one processor (not shown) and at least one memory device (not shown). In some embodiments, the ECU 130 includes, for example, a 3D model of the component 134 to be fabricated by the additive manufacturing system 100. In some embodiments, the ECU 130 executes operations to control the operation of the additive manufacturing system 100 based at least partially on instructions from human operators. Operations executed by the ECU 130 include controlling power output of the focused energy source 104 and adjusting the galvanometers 108 to control the scanning speed of the focused energy source 104 within the additive manufacturing system 100.

In the exemplary embodiment, a computing device 156 is coupled to the imaging device 102 and the focused energy source 104. The computing device 156 includes a memory device 158 and the processor 154 coupled to the memory device 158. In some embodiments, the processor 154 includes one or more processing units, such as, without limitation, a multi-core configuration. In the exemplary embodiment, the processor 154 includes a field programmable gate array (FPGA). Alternatively, the processor 154 may be any type of processor that permits the computing device 156 to operate as described herein. In some embodiments, executable instructions are stored in the memory device 158. The computing device 156 is configurable to perform one or more operations described herein by programming the processor 154. For example, the processor 154 may be programmed by encoding an operation as one or more executable instructions and providing the executable instructions in the memory device 158. In the exemplary embodiment, the memory device 158 is one or more devices that enable storage and retrieval of information such as executable instructions or other data. In some embodiments, the memory device 158 includes one or more computer readable media, such as, without limitation, random access memory (RAM), dynamic RAM, static RAM, a solid-state disk, a hard disk, read-only memory (ROM), erasable programmable ROM, electrically erasable programmable ROM, or nonvolatile RAM memory. The above memory types are exemplary only, and are thus not limiting as to the types of memory usable for storage of a computer program.

In some embodiments, the memory device 158 is configured to store build parameters including, without limitation, real-time and historical build parameter values, or any other type of data. In the exemplary embodiment, the memory device 158 stores images generated by the imaging device 102. In alternative embodiments, the memory device 158 stores any data that enables the additive manufacturing system 100 to operate as described herein. In some embodiments, the processor 154 removes or "purges" data from the memory device 158 based on the age of the data. For example, the processor 154 overwrites previously recorded and stored data associated with a subsequent time or event. In addition, or alternatively, the processor 154 removes data that exceeds a predetermined time interval. In addition, the memory device 158 includes, without limitation, sufficient data, algorithms, and commands to facilitate monitoring and measuring of build parameters and the geometric conditions of the component 134 fabricated by the additive manufacturing system 100.

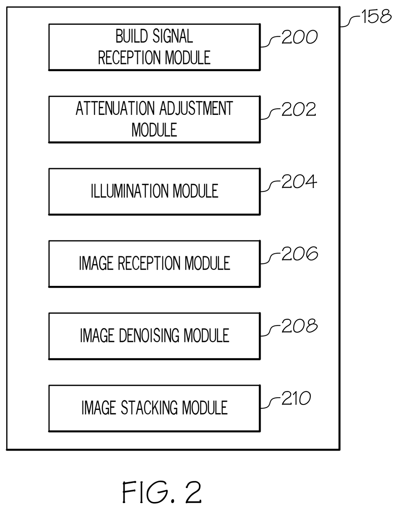

The memory device 158 may also store one or more memory modules storing instructions that may be executed by the processor 154. Each of the memory modules stored in the memory device may be a program module in the form of operating systems, application program modules, and other program modules. Such a program module may include, but is not limited to, routines, subroutines, programs, objects, components, data structures and the like for performing specific tasks or executing specific data types as will be described below with respect to FIG. 2.

In some embodiments, the computing device 156 includes a presentation interface 160 coupled to the processor 154. The presentation interface 160 presents information, such as images generated by the imaging device 102, to a user. In one embodiment, the presentation interface 160 includes a display adapter (not shown) coupled to a display device (not shown), such as a cathode ray tube (CRT), a liquid crystal display (LCD), an organic LED (OLED) display, or an "electronic ink" display. In some embodiments, the presentation interface 160 includes one or more display devices. In addition, or alternatively, the presentation interface 160 includes an audio output device (not shown), for example, without limitation, an audio adapter or a speaker (not shown).

In some embodiments, the computing device 156 includes a user input interface 162. In the exemplary embodiment, the user input interface 162 is coupled to the processor 154 and receives input from the user. In some embodiments, the user input interface 162 includes, for example, without limitation, a keyboard, a pointing device, a mouse, a stylus, a touch sensitive panel, such as, without limitation, a touch pad or a touch screen, and/or an audio input interface, such as, without limitation, a microphone. In further embodiments, a single component, such as a touch screen, functions as both a display device of the presentation interface 160 and the user input interface 162.

In the exemplary embodiment, a communication interface 164 is coupled to the processor 154 and is configured to be coupled in communication with one or more other devices, such as the imaging device 102, and to perform input and output operations with respect to such devices while performing as an input channel. For example, in some embodiments, the communication interface 164 includes, without limitation, a wired network adapter, a wireless network adapter, a mobile telecommunications adapter, a serial communication adapter, or a parallel communication adapter. The communication interface 164 receives a data signal from or transmits a data signal to one or more remote devices. For example, in an alternative embodiment, the communication interface 164 of the computing device 156 communicates with the ECU 130.

The presentation interface 160 and the communication interface 164 are both capable of providing information suitable for use with the methods described herein, such as, providing information to the user or the processor 154. Accordingly, the presentation interface 160 and the communication interface 164 are referred to as output devices. Similarly, the user input interface 162 and the communication interface 164 are capable of receiving information suitable for use with the methods described herein and are referred to as input devices.

In reference to FIG. 1, an exemplary method of manufacturing the component 134 using the additive manufacturing system 100 includes depositing a first layer of particulate 114 on the build plane 112. The shutter 146 of imaging device 102 is moved to the open position and maintained in the open position. In some embodiments, the shutter 146 is maintained in the open position for longer than 1 minute. In the exemplary embodiment, the shutter 146 is maintained in the open position for a period of time in a range of 1 minute and about 10 minutes. In alternative embodiments, the shutter 146 is maintained in the open position for any period of time that enables the imaging device 102 to operate as described herein.

In the exemplary embodiment, the energy beam 132 is directed toward the first layer of the particulate 114 on the build plane 112 and the particulate 114 is heated to a melting point. The particulate 114 at least partially melts to form a melt pool, which emits light. In some embodiments, the ECU 130 controls the additive manufacturing system 100 to direct the energy beam 132 from the focused energy source 104 towards the particulate 114. The ECU 130 controls the movement of the galvanometers 108 to scan the energy beam 132 across the particulate 114 on the build plane 112 according to a predetermined path defined by the build file for the component 134 to form a melt path. The camera 136 is positioned having a line of sight on the build plane 112 such that the field of view of the camera 136 encompasses a portion of the melt path. In the exemplary embodiment, light from the melt pool travels through the aperture 148 and strikes the sensor 140 while the shutter 146 is maintained in the open position. In some embodiments, a second layer of particulate 114 is deposited on the build plane 112 and the second layer of particulate 114 is heated by the energy beam 132. The camera 136 may capture a plurality of images during operation of the additive manufacturing system 100 as discussed below with respect to FIG. 2.

Turning now to FIG. 2, the memory modules stored in the memory device 158 are schematically depicted. The memory modules include a build signal reception module 200, an attenuation adjustment module 202, an illumination module 204, an image reception module 206, an image denoising module 208, and an image stacking module 210.

The build signal reception module 200 may receive signals from the ECU 130 (FIG. 1) at different stages of operation of the additive manufacturing system 100 (FIG. 1). This information may be used by the imaging device 102 (FIG. 1) such that the camera 136 (FIG. 1) may capture different types of images. In particular, the camera 136 may capture three types of images of the component 134 (FIG. 1) as it is being built by the additive manufacturing system 100 at different stages of the build.

The camera 136 may capture a pre-weld image of the build plane 112 (FIG. 1) after the particulate 114 (FIG. 1) has been applied but before the energy beam 132 (FIG. 1) is applied. The pre-weld image may capture powder spreading quality. The camera 136 may also capture an in-weld image while the energy beam 132 (FIG. 1) is scanned across the particulate 114 on the build plane 112. The in-weld image may be formed from a stack of images captured while the energy beam 132 is on, as disclosed in further detail below. The in-weld image may capture the melt pool trajectory during the exposure of the energy beam 132. Lastly, the camera 136 may capture a post-weld image of the component layer after the exposure of the energy beam 132. The post-weld image may capture an image of a current layer of the component 134 after the layer has been completed. These three images may be analyzed by a user or computer algorithm to determine whether the additive manufacturing system 100 is functioning properly.

In order for the imaging device 102 to capture the three types of images discussed above, the build signal reception module 200 may receive, from the ECU 130, an indication of the different phases of a build. In particular, when the particulate 114 has been deposited on the build plane 112, but before the particulate 114 is exposed to the energy beam 132, the ECU 130 may transmit a "powder applied" signal to the computing device 156 (FIG. 1). When this signal is received by the build signal reception module 200, the camera 136 may capture the pre-weld image, as discussed in further detail below. When the focused energy source 104 begins emitting the energy beam 132, the ECU 130 may transmit a "weld on" signal to the computing device 156. When this signal is received by the build signal reception module 200, the camera 136 may begin the process of capturing the in-weld image, as discussed in further detail below. When the focused energy source 104 turns off the energy beam 132, after a build layer is complete, the ECU 130 may transmit a "weld off" signal to the computing device 156. When this signal is received by the build signal reception module 200, the camera 136 may capture the post-weld image, as discussed in further detail below.

Referring still to FIG. 2, the attenuation adjustment module 202 may adjust the adjustable optical attenuator 144 (FIG. 1), as disclosed herein. As discussed above, the camera 136 may capture a pre-weld image of the build plane 112 before exposure to the energy beam 132, an in-weld image of the build plane 112 during exposure to the energy beam 132, and a post-weld image after exposure to the energy beam 132. As such, the pre-weld and post-weld images are captured when the focused energy source 104 (FIG. 1) is not emitting the energy beam 132, and the in-weld image is captured when the focused energy source 104 is emitting the energy beam 132. Thus, the in-weld image is captured under dramatically different lighting conditions than the pre-weld and post-weld images.

In particular, a large amount of light from the energy beam 132 passes through the aperture 148 (FIG. 1) while the in-weld image is captured, while no light from the energy beam 132 passes through the aperture 148 while the pre-weld and post-weld images are captured. As such, if no adjustment is made to the amount of light entering the camera 136 during each of these three phases, the camera 136 has a very large dynamic range in order to capture both the pre-weld and post-weld images, and the in-weld image. This may be a difficult task for the camera 136, and as such, the adjustable optical attenuator 144 may adjust the amount of light received by the camera 136.

In particular, after the build signal reception module 200 receives the "powder applied" signal, the attenuation adjustment module 202 may switch the adjustable optical attenuator 144 to a low-attenuation mode, in which little or no attenuation is performed. This may allow a large amount of light to pass through the aperture 148 and be received by the camera 136. This may allow for the camera 136 to capture the pre-weld image when the build plane 112 is only illuminated by the light source 152 (FIG. 1). After the build signal reception module 200 receives the "weld on" signal, the attenuation adjustment module 202 may switch the adjustable optical attenuator 144 to a high-attenuation mode, in which a greater amount of attenuation is performed. This may allow a smaller amount of light to pass through the aperture 148 and be received by the camera 136 than in the low-attenuation mode. As such, this may limit the amount of light received by the camera 136 while the build plane 112 is illuminated by the energy beam 132 and the in-weld image is captured. After the build signal reception module 200 receives the "weld off" signal, the attenuation adjustment module 202 may switch the adjustable optical attenuator 144 back to the low-attenuation mode. This may allow for a larger amount of light to pass through the aperture 148 and be received by the camera 136 while capturing the post-weld image while the build plane 112 is illuminated only by the light source 152.

A variety of different mechanisms may be used for the adjustable optical attenuator 144. In one example, the adjustable optical attenuator 144 comprises an electronically controlled optical attenuator. In some examples, the adjustable optical attenuator 144 is liquid crystal based. In another example, the adjustable optical attenuator 144 comprises an electronic iris that can be adjusted to different attenuation levels. In another example, the adjustable optical attenuator 144 comprises a mechanical iris that can be adjusted to different attenuation levels. In other examples, the adjustable optical attenuator 144 comprises a filter wheel 170 that can be rotated in front of the aperture 148 (e.g., by a motor). In one example, the filter wheel 170 may comprise two different filters having different levels of attenuation. As such, the attenuation can be changed based on which filter is rotated in front of the aperture 148. In another example, the filter wheel 170 may comprise two different light polarizers which polarize light in different amounts. As such, the attenuation can be changed based on which light polarizer is rotated in front of the aperture 148. Accordingly, in this example, the adjustable optical attenuator 144 comprises an adjustable light polarizer.

Referring still to FIG. 2, the illumination module 204 may control illumination of the light source 152. As discussed above, when the camera 136 captures the in-weld image, the build plane 112 is illuminated by the energy beam 132 from the focused energy source 104, and as such, the build plane 112 is sufficiently illuminated for the camera 136 to capture the in-weld image. However, when the pre-weld and post-weld images are captured, the build plane 112 is not illuminated by the energy beam 132. Accordingly, the build plane 112 may not be sufficiently illuminated for these images to be captured without additional illumination. As such, in embodiments, the illumination module 204 may turn on the light source 152 to illuminate the build plane 112 when the pre-weld and post-weld images are captured.

In embodiments, after the build signal reception module 200 receives the "powder applied" signal, the illumination module 204 may turn on the light source 152 such that the light source 152 illuminates the build plane 112 while the camera 136 captures the pre-weld image. After the build signal reception module 200 receives the "weld on" signal, the illumination module 204 may turn off the light source 152 while the camera 136 captures the in-weld image while the build plane 112 is illuminated by the energy beam 132. After the build signal reception module 200 receives the "weld off" signal, the illumination module 204 may turn on the light source 152 such that the light source 152 illuminates the build plane 112 while the camera 136 captures the post-weld image. In some examples, the light source 152 may remain on while the camera 136 captures the in-weld image. In these examples, the build plane 112 is illuminated by both the energy beam 132 and the light source 152 while the in-weld image is captured. However, the light intensity from the light source 152 is typically much less than the light intensity from the energy beam 132, which may allow for the in-weld image to be captured while both sources illuminate the build plane 112.

Referring still to FIG. 2, the image reception module 206 may cause the camera 136 to capture the pre-weld, in-weld, and post-weld images, as disclosed herein. In particular, after the build signal reception module 200 receives the "powder applied" signal, the attenuation adjustment module 202 sets the adjustable optical attenuator 144 to the low-attenuation mode, and the illumination module 204 illuminates the light source 152, the image reception module 206 may cause the camera 136 to capture the pre-weld image of the build plane 112 with the particulate 114 applied. This pre-weld image indicates the powder spreading quality.

After the build signal reception module 200 receives the "weld on" signal, the attenuation adjustment module 202 sets the adjustable optical attenuator 144 to the high-attenuation mode, and the illumination module 204 turns off the light source 152, the image reception module 206 may cause the camera 136 to capture the in-weld image as disclosed herein. In particular, the image reception module 206 may cause the camera 136 to capture a series of frames while the energy beam 132 is scanned across the particulate 114 on build plane 112 as a build layer is being constructed. Thus, the camera 136 may continuously acquire images of the moving melt pool traces.

The camera 136 may have a relatively high frame rate with a short black-out time between consecutive frames during which no light is captured by the camera 136. This black-out time between consecutive frames may be shorter than the time that it takes the energy beam 132 to move a distance substantially longer than the dimensions of the melt pool. This may reduce the amount of missing data between frames.

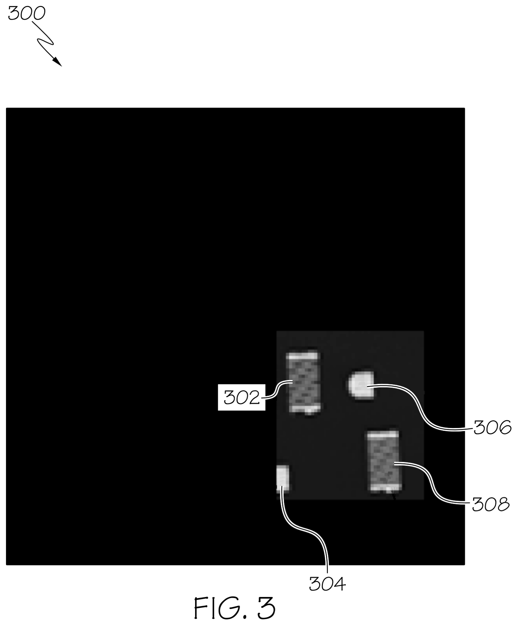

FIG. 3 shows an example image 300 that may be captured by the camera 136 while the energy beam 132 (FIG. 1) is exposed to the particulate 114 (FIG. 1) on the build plane 112 (FIG. 1). In the image 300, features 302, 304, 306, and 308 can be seen, which indicate portions of the particulate 114 that have been exposed to the energy beam 132. The rest of the image 300 is dark, indicating portions of the particulate 114 that have not been exposed to the energy beam 132. As discussed above, the image reception module 206 (FIG. 2) may cause the camera 136 (FIG. 1) to capture a plurality of such images while the energy beam 132 is scanned across the particulate 114 on build plane 112. As such, each image captured by the camera 136 will show a different portion of the melt pool, and the images may be combined to show the entire melt pool trajectory, as discussed in further detail below.

As discussed above, the dark portion of image 300 indicates portions of the particulate 114 that have not been exposed to the energy beam 132. However, the camera 136 may be susceptible to noise, and may record some amount of light exposure for pixels that have not been exposed to energy beam 132 due to this noise. As such, in some examples, a denoising procedure may be implemented by the image denoising module 208 (FIG. 2), as disclosed herein.

In embodiments, the image denoising module 208 may determine a threshold light intensity value. This threshold value may be a light intensity value that is above the width of noise distribution in the dark portion of images captured by the camera 136 (e.g., the dark portion of image 300). However, the threshold light intensity value may be set well below the light intensity value recorded by a pixel that has been exposed to the energy beam 132. Then, for every pixel of an image recorded by the camera 136 that records a light intensity value below this threshold, the image denoising module 208 may set the pixel value to zero. This may ensure that every pixel that has not been exposed to the energy beam 132 will be set to zero, thereby avoiding an accumulation of grey values due to camera noise.

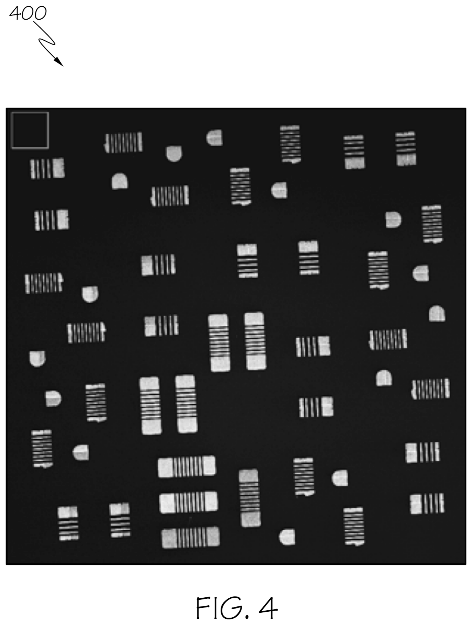

Referring back to FIG. 2, the image stacking module 210 may stack the images captured by the camera 136 while the energy beam 132 is exposed to the particulate 114 to generate a composite in-weld image. As discussed above, each image captured by the camera 136 during the in-weld phase may show a different portion of the melt pool trajectory. As such, the captured images may be combined to generate the composite in-weld image that shows the entire melt pool trajectory. In one example, the image stacking module 210 combines the in-weld images by summing the pixel value of each image to generate the composite in-weld image. In another example, the image stacking module 210 generates the composite in-weld image by taking a maximum value of each pixel across the captured images. FIG. 4 shows an example composite in-weld image 400 that may be generated by the image stacking module 210 using one of these methods. The composite in-weld image 400 shows features from the entire melt pool trajectory.

In the illustrated example, after each image is received by the image reception module 206 and denoised by the image denoising module 208, the image stacking module 210 may add the pixel values from the denoised image to the composite in-weld image. As such, the composite in-weld image may be continually generated as each new image is received. However, in other examples, the image stacking module 210 may simultaneously add the pixel values from multiple images to the composite in-weld image.

In some examples, rather than stacking the multiple images captured by the camera 136, the computing device 156 may compare individual captured images to expected patterns based on the scan position of the energy beam 132 for a particular layer to determine whether the layer is being built as expected. In other examples, the computing device 156 may isolate the location on the build plane 112 where the energy beam 132 is focused and this portion of the image captured by the camera 136 may be extracted, with the rest of the image discarded. The extracted images portions from each layer may then be stacked by the image stacking module 210.

Referring back to FIG. 2, the image reception module 206 may cause the camera 136 to capture the post-weld image, as disclosed herein. In particular, after the build signal reception module 200 receives the "weld off" signal, the attenuation adjustment module 202 sets the adjustable optical attenuator 144 to the low-attenuation mode, and the illumination module 204 illuminates the light source 152, the image reception module 206 may cause the camera 136 to capture the post-weld image of the build plane 112. This post-weld image shows the top view of the current layer of the component 134 being built.

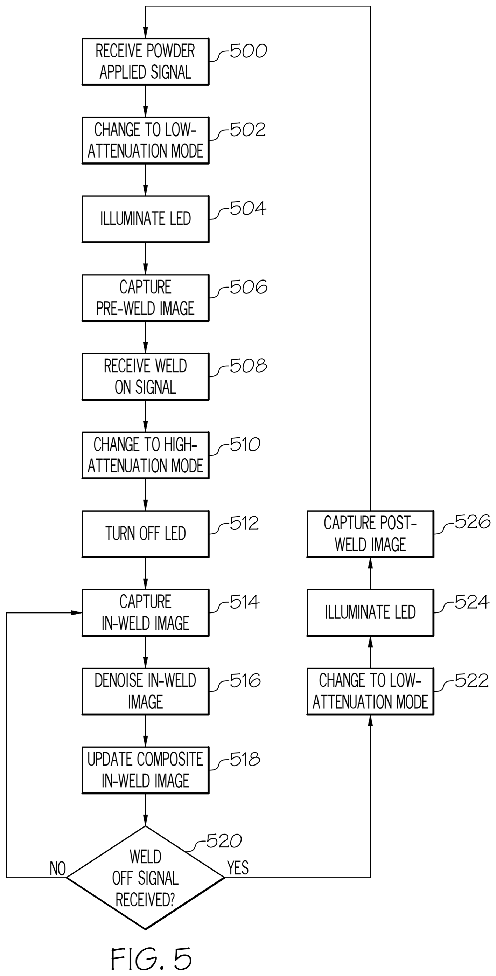

Turning now to FIG. 5, a flowchart of an example method that may be performed by the computing device 156 (FIG. 1) is shown. At step 500, the build signal reception module 200 (FIG. 2) receives the "powder applied" signal from the ECU 130 (FIG. 1). At step 502, the attenuation adjustment module 202 (FIG. 2) changes the adjustable optical attenuator 144 (FIG. 1) to the low-attenuation mode, which causes the adjustable optical attenuator 144 to adjust the attenuation level of the camera 136 to a first attenuation level (e.g., a low attenuation level). At step 504, the illumination module 204 (FIG. 2) illuminates the light source 152 (FIG. 1). At step 506, after the adjustable optical attenuator 144 has changed to the low-attenuation mode and the light source 152 has been illuminated, the image reception module 206 (FIG. 2) causes the camera 136 (FIG. 1) to capture the pre-weld image of the current layer of the component 134 (FIG. 1) being built on the build plane 112 (FIG. 1).

At step 508, the build signal reception module 200 (FIG. 2) receives the "weld on" signal from the ECU 130, indicating a start of exposure of a layer of the component 134 on the build plane to the energy beam 132. At step 510, the attenuation adjustment module 202 (FIG. 2) changes the adjustable optical attenuator 144 to the high-attenuation mode, which causes the adjustable optical attenuator 144 to adjust the attenuation level of the camera to a second attenuation level of the camera 136 to a second attenuation level (e.g., a high attenuation level). The second attenuation level may have a higher attenuation than the first attenuation level. At step 512, after the adjustable optical attenuator 144 has changed to the high-attenuation mode, the illumination module 204 (FIG. 2) turns off the light source 152.

At step 514, after the adjustable optical attenuator 144 has changed to the high-attenuation mode and the light source 152 is turned off, the image reception module 206 (FIG. 2) causes the camera 136 (FIG. 1) to capture an in-weld image. At step 516, the image denoising module 208 (FIG. 2) de-noises the captured in-weld image by setting pixel values below a threshold value to zero.

At step 518, the image stacking module 210 (FIG. 2) updates the composite in-weld image based on the denoised image. In one example, the image stacking module 210 adds the pixel values of the denoised image to the composite in-weld image. In another example, the image stacking module 210 determines whether any pixel values of the denoised image are greater than the corresponding pixel values of the in-weld composite image. If so, than the image stacking module 210 updates any such pixel values to the pixel values from the denoised image.

At step 520, the build signal reception module 200 determines whether the" weld off" signal has been received from the ECU 130. If the "weld off" signal has not been received from the ECU 130, control returns to step 514 and the next in-weld image is captured after a short black-out time. If the "weld off" signal has been received from the ECU 130, indicating an end of exposure of the layer of the component 134 on the build plane to the energy beam 132, control passes to step 522.

At step 522, the attenuation adjustment module 202 changes the adjustable optical attenuator 144 to the low-attenuation mode. At step 524, the illumination module 204 illuminates the light source 152. At step 526, the image reception module 206 causes the camera 136 to capture the post-weld image. Control then returns to step 500 and the method of FIG. 5 is repeated for the next layer of the build. FIG. 5 may be repeated until the layers have been completed.

The above described systems and methods relate to additive manufacturing systems, such as Direct Metal Laser Melting (DMLM) systems. The embodiments described above include a focused energy source and an imaging device. During operation of the focused energy source, the imaging device generates a pre-weld image, an in-weld image, and a post-weld image of a melted particulate forming a melt pool. In some embodiments, substantially the entire melt pool is captured in the in-weld and post-weld images. The pre-weld image illustrates the powder coat before exposure to a beam from the focused energy source. The in-weld image illustrates intensity of light throughout the melt pool. The post-weld image illustrates a top view of a component after a layer has been completed. In some embodiments, the pre-weld, in-weld, and post-weld images may be inspected to determine variations and defects in the additive manufacturing process. As a result, errors in the additive manufacturing process are corrected and the process is improved. In some embodiments, the pre-weld, in-weld, and post-weld images may be used in a feed-forward process to improve the manufacturing of subsequent components.

An exemplary technical effect of the methods and systems described herein includes at least one of: (a) capturing a pre-weld image that illustrates the powder coat before exposure to the beam from the focused energy source; (b) capturing a post-weld image that illustrates a completed layer of a component being built; (c) capturing the pre-weld, in-weld, and post-weld images with a CMOS camera; (d) imaging substantially all of the melt pool in a single layer during formation of a component; (e) determining intensity of light from the melt pool at different points; (f) relating images of the melt pool to positions; (f) reducing time and resources required for imaging the melt pool; (g) increasing the compatibility of imaging devices with different additive manufacturing systems; (h) detecting defects during the additive manufacturing process; (i) reducing product development cycle time; (j) increasing machine control for precise geometries; and (k) providing visual feedback on the powder coat, the melt pool, and layers of the component being built.

Some embodiments involve the use of one or more electronic or computing devices. Such devices typically include a processor or controller, such as a general purpose central processing unit (CPU), a graphics processing unit (GPU), a microcontroller, a field programmable gate array (FPGA), a reduced instruction set computer (RISC) processor, an application specific integrated circuit (ASIC), a programmable logic circuit (PLC), and/or any other circuit or processor capable of executing the functions described herein. In some embodiments, the methods described herein are encoded as executable instructions embodied in a computer readable medium, including, without limitation, a storage device, and/or a memory device. Such instructions, when executed by a processor, cause the processor to perform at least a portion of the methods described herein. The above examples are exemplary only, and thus are not intended to limit in any way the definition and/or meaning of the term processor.

Exemplary embodiments for enhancing the build parameters for making additive manufactured components are described above in detail. The apparatus, systems, and methods are not limited to the specific embodiments described herein, but rather, operations of the methods and components of the systems may be utilized independently and separately from other operations or components described herein. For example, the systems, methods, and apparatus described herein may have other industrial or consumer applications and are not limited to practice with components as described herein. Rather, one or more embodiments may be implemented and utilized in connection with other industries.

Further aspects of the disclosure are provided by the subject matter of the following clauses.

A system comprising an apparatus for building a component by additive manufacturing using an energy beam, the apparatus comprising a build plane on which the component is built; a camera having a line of sight on the build plane; an adjustable attenuator to adjust an attenuation level of the camera; and a computing device configured to receive a powder applied signal from the apparatus indicating that a layer of particulate has been deposited onto the build plane; upon receiving the powder applied signal, cause the adjustable attenuator to adjust the attenuation level of the camera to a first attenuation level; receive a pre-weld image of the build plane captured by the camera after the attenuation level of the camera is set to the first attenuation level; receive a weld on signal from the apparatus indicating a start of exposure of a layer of the component on the build plane to the energy beam; upon receiving the weld on signal, cause the adjustable attenuator to adjust the attenuation level of the camera to a second attenuation level, the second attenuation level having a higher attenuation than the first attenuation level; receive at least one in-weld image of the build plane captured by the camera after the attenuation level of the camera is set to the second attenuation level; receive a weld off signal from the apparatus indicating an end of exposure of the layer of the component on the build plane to the energy beam; upon receiving the weld off signal, cause the adjustable attenuator to adjust the attenuation level of the camera to a third attenuation level, the third attenuation level having a lower attenuation than the second attenuation level; and receive a post-weld image of the build plane captured by the camera after the attenuation level of the camera is set to the third attenuation level.

The system of any preceding clause, wherein the camera is a complementary metal-oxide-semiconductor (CMOS) camera.

The system of any preceding clause, further comprising a light source to illuminate the build plane.

The system of any preceding clause, wherein the computing device is further configured to cause the light source to illuminate the build plane after receiving the powder applied signal; cause the light source to stop illuminating the build plane after receiving the weld on signal; and cause the light source to illuminate the build plane after receiving the weld off signal.

The system of any preceding clause, wherein the light source is a light-emitting diode.

The system of any preceding clause, wherein the camera comprises a tilt-shift lens.

The system of any preceding clause, wherein the adjustable attenuator comprises an electronically controlled optical attenuator.

The system of any preceding clause, wherein the adjustable attenuator comprises a filter wheel, having two different filters, configured to be rotated in front of a lens of the camera.

The system of any preceding clause, wherein the adjustable attenuator comprises an adjustable light polarizer.

An apparatus comprising one or more processors; memory comprising instructions that, when executed by the one or more processors, cause the apparatus to receive a powder applied signal from an additive manufacturing system indicating that a layer of particulate has been deposited onto a build plane; upon receiving the powder applied signal, cause an adjustable attenuator to adjust the attenuation level of a camera to a first attenuation level; receive a pre-weld image of the build plane captured by the camera after the attenuation level of the camera is set to the first attenuation level; receive a weld on signal from the additive manufacturing system indicating a start of exposure of a layer of a component on the build plane to an energy beam; upon receiving the weld on signal, cause the adjustable attenuator to adjust the attenuation level of the camera to a second attenuation level, the second attenuation level having a higher attenuation than the first attenuation level; receive at least one in-weld image of the build plane captured by the camera after the attenuation level of the camera is set to the second attenuation level; receive a weld off signal from the apparatus indicating an end of exposure of the layer of the component on the build plane to the energy beam; upon receiving the weld off signal, cause the adjustable attenuator to adjust the attenuation level of the camera to a third attenuation level, the third attenuation level having a lower attenuation than the second attenuation level; and receive a post-weld image of the build plane captured by the camera after the attenuation level of the camera is set to the third attenuation level.

The apparatus of any preceding clause, wherein the camera is a complementary metal-oxide-semiconductor (CMOS) camera.

The apparatus of any preceding clause, wherein the instructions further cause the apparatus to cause a light source to illuminate the build plane.

The apparatus of any preceding clause, wherein the instructions further cause the apparatus to cause a light source to illuminate the build plane after receiving the powder applied signal; cause the light source to stop illuminating the build plane after receiving the weld on signal; and cause the light source to illuminate the build plane after receiving the weld off signal.

The apparatus of any preceding clause, wherein the light source is a light-emitting diode.

The apparatus of any preceding clause, wherein the adjustable attenuator comprises an electronically controlled optical attenuator.

The apparatus of any preceding clause, wherein the adjustable attenuator comprises a filter wheel that can rotate different filters in front of a lens of the camera.

The apparatus of any preceding clause, wherein the adjustable attenuator comprises an adjustable light polarizer.

A method comprising receiving a powder applied signal from an additive manufacturing system indicating that a layer of particulate has been deposited onto a build plane; upon receiving the powder applied signal, causing an adjustable attenuator to adjust the attenuation level of a camera to a first attenuation level; receiving a pre-weld image of the build plane captured by the camera after the attenuation level of the camera is set to the first attenuation level; receiving a weld on signal from the additive manufacturing system indicating a start of exposure of a layer of a component on the build plane to an energy beam; upon receiving the weld on signal, causing the adjustable attenuator to adjust the attenuation level of the camera to a second attenuation level, the second attenuation level having a higher attenuation than the first attenuation level; receiving at least one in-weld image of the build plane captured by the camera after the attenuation level of the camera is set to the second attenuation level; receiving a weld off signal from the apparatus indicating an end of exposure of the layer of the component on the build plane to the energy beam; upon receiving the weld off signal, causing the adjustable attenuator to adjust the attenuation level of the camera to a third attenuation level, the third attenuation level having a lower attenuation than the second attenuation level; and receiving a post-weld image of the build plane captured by the camera after the attenuation level of the camera is set to the third attenuation level.

The method of any preceding clause, wherein the camera is a complementary metal-oxide-semiconductor (CMOS) camera.

The method of any preceding clause, further comprising causing a light source to illuminate the build plane after receiving the powder applied signal; causing the light source to stop illuminating the build plane after receiving the weld on signal; and causing the light source to illuminate the build plane after receiving the weld off signal.

The method of any preceding clause, wherein the light source is a light-emitting diode.

The method of any preceding clause, wherein the adjustable attenuator comprises an electronically controlled optical attenuator.

The method of any preceding clause, wherein the adjustable attenuator comprises a filter wheel, having two different filters, configured to be rotated in front of a lens of the camera.

The method of any preceding clause, wherein the adjustable attenuator comprises an adjustable light polarizer.

An apparatus comprising one or more processors; and a memory comprising machine-readable instructions that, when executed by the one or more processors, cause the apparatus to receive a plurality of images of a particulate on a build plane of an additive manufacturing system captured by a camera while one layer of the particulate is exposed to an energy beam of the additive manufacturing system; and combine the plurality of images to generate an image of a melt pool trajectory of the one layer of the particulate.

The apparatus of any preceding clause, wherein the instructions further cause the apparatus to combine the plurality of images by summing the pixel values from each of the plurality of images.

The apparatus of any preceding clause, wherein the instructions further cause the apparatus to combine the plurality of images by taking a maximum value of each pixel among the plurality of images.

The apparatus of any preceding clause, wherein the instructions further cause the apparatus to receive a signal from the additive manufacturing system indicating a start of exposure of the particulate to the energy beam; and capture the plurality of images after receiving the signal from the additive manufacturing system.

The apparatus of any preceding clause, wherein the instructions further cause the apparatus to receive a signal from the additive manufacturing system indicating an end of exposure of the particulate to the energy beam; and stop capturing the plurality of images after receiving the signal from the additive manufacturing system.

The apparatus of any preceding clause, wherein the instructions further cause the apparatus to set pixel values for each pixel of the plurality of images having a value less than a predetermined threshold to zero.

The apparatus of any preceding clause, wherein the predetermined threshold is greater than or equal to a noise distribution associated with a camera the captures the plurality of images.

The apparatus of any preceding clause, wherein the camera is a complementary metal-oxide-semiconductor (CMOS) camera.

A method comprising receiving a plurality of images of a particulate on a build plane of an additive manufacturing system captured by a complementary metal-oxide-semiconductor (CMOS) camera while one layer of the particulate is exposed to an energy beam of the additive manufacturing system; and combining the plurality of images to generate an image of a melt pool trajectory of the one layer of the particulate.

The method of any preceding clause, further comprising combining the plurality of images by summing the pixel values from each of the plurality of images.

The method of any preceding clause, further comprising combining the plurality of images by taking a maximum value of each pixel among the plurality of images.

The method of any preceding clause, further comprising receiving a signal from the additive manufacturing system indicating a start of exposure of the particulate to the energy beam; and beginning to capture the plurality of images after receiving the signal from the additive manufacturing system.

The method of any preceding clause, further comprising receiving a signal from the additive manufacturing system indicating an end of exposure of the particulate to the energy beam; and stopping the capture of the plurality of images after receiving the signal from the additive manufacturing system.

The method of any preceding clause, further comprising setting pixel values for each pixel of the plurality of images having a value less than a predetermined threshold to zero.

The method of any preceding clause, wherein the predetermined threshold is greater than or equal to a distribution of noise associated with a camera the captures the plurality of images.

The method of any preceding clause, wherein the camera is a complementary metal-oxide-semiconductor (CMOS) camera.

A system comprising an apparatus for building a component by additive manufacturing using an energy beam, the apparatus comprising a build plane on which the component is built; a camera having a line of sight on the build plane; and a computing device configured to receive a powder applied signal from the apparatus indicating a start of exposure of a layer of the component to the energy beam; upon receiving the powder applied signal, begin receiving a plurality of images of the layer of the component on the build plane; receive a weld on signal from the apparatus indicating an end of exposure of the layer of the component to the energy beam; upon receiving the weld on signal, stop receiving the plurality of images of the layer of the component on the build plane; and combine the plurality of images to generate an image of a melt pool trajectory of the one layer of the particulate.

The system of any preceding clause, wherein the computing device is further configured to combine the plurality of images by summing the pixel values from each of the plurality of images.

The system of any preceding clause, wherein the computing device is further configured to combine the plurality of images by taking a maximum value of each pixel among the plurality of images.

The system of any preceding clause, wherein the computing device is further configured to receive a signal from the additive manufacturing system indicating a start of exposure of the particulate to the energy beam; and begin capturing the plurality of images after receiving the signal from the additive manufacturing system.

The system of any preceding clause, wherein the computing device is further configured to receive a signal from the additive manufacturing system indicating an end of exposure of the particulate to the energy beam; and stop capturing the plurality of images after receiving the signal from the additive manufacturing system.

The system of any preceding clause, wherein the computing device is further configured to set pixel values for each pixel of the plurality of images having a value less than a predetermined threshold to zero.

The system of any preceding clause, wherein the predetermined threshold is greater than or equal to a distribution of noise associated with a camera the captures the plurality of images.

The system of any preceding clause, wherein the camera is a complementary metal-oxide-semiconductor (CMOS) camera.

## Claims

1. A system (100), comprising:
an apparatus (130) for building a component (134) by additive manufacturing using an energy beam (132), the apparatus comprising a build plane (112) on which the component (134) is built;
a camera (136) having a line of sight on the build plane (112);
an adjustable optical attenuator (144) to adjust an attenuation level of the camera (136); and
a computing device (156) configured to:
receive a powder applied signal from the apparatus (130) indicating that a layer of particulate (114) has been deposited onto the build plane (112);
upon receiving the powder applied signal, cause the adjustable optical attenuator (144) to adjust the attenuation level of the camera (136) to a first attenuation level;
receive a pre-weld image of the build plane (112) captured by the camera (136) after the attenuation level of the camera (136) is set to the first attenuation level;
receive a weld on signal from the apparatus (130) indicating a start of exposure of a layer of the component (134) on the build plane (112) to the energy beam (132);
upon receiving the weld on signal, cause the adjustable optical attenuator (144) to adjust the attenuation level of the camera (136) to a second attenuation level, the second attenuation level having a higher attenuation than the first attenuation level;
receive at least one in-weld image of the build plane (112) captured by the camera (136) after the attenuation level of the camera (136) is set to the second attenuation level;
receive a weld off signal from the apparatus (130) indicating an end of exposure of the layer of the component (134) on the build plane (112) to the energy beam (132);
upon receiving the weld off signal, cause the adjustable optical attenuator (144) to adjust the attenuation level of the camera (136) to a third attenuation level, the third attenuation level having a lower attenuation than the second attenuation level; and
receive a post-weld image of the build plane (112) captured by the camera (136) after the attenuation level of the camera is set to the third attenuation level.

2. The system of claim 1, wherein the camera (136) is a complementary metal-oxide-semiconductor (CMOS) camera.

3. The system of claim 1, further comprising a light source (152) to illuminate the build plane (112).

4. The system of claim 3, wherein the computing device (156) is further configured to:
cause the light source (152) to illuminate the build plane (112) after receiving the powder applied signal;
cause the light source (152) to stop illuminating the build plane (112) after receiving the weld on signal; and
cause the light source (152) to illuminate the build plane (112) after receiving the weld off signal.

5. The system of claim 1, wherein the camera (136) comprises a tilt-shift lens.

6. The system of claim 1, wherein the adjustable optical attenuator (144) comprises an electronically controlled optical attenuator.

7. The system of claim 1, wherein the adjustable optical attenuator (144) comprises a filter wheel, having two different filters, configured to be rotated in front of a lens of the camera.

8. The system of claim 1, wherein the adjustable optical attenuator comprises an adjustable light polarizer (170).

9. An apparatus (130), comprising:
one or more processors (154); and
memory (158) comprising machine-readable instructions that, when executed by the one or more processors (154), cause the apparatus to:
receive a powder applied signal from an additive manufacturing system (100) indicating that a layer of particulate (114) has been deposited onto a build plane (112);
upon receiving the powder applied signal, cause an adjustable optical attenuator (144) to adjust an attenuation level of a camera (136) to a first attenuation level;
receive a pre-weld image of the build plane (112) captured by the camera (136) after the attenuation level of the camera (136) is set to the first attenuation level;
receive a weld on signal from the additive manufacturing system (100) indicating a start of exposure of a layer of a component (134) on the build plane (112) to an energy beam (132);
upon receiving the weld on signal, cause the adjustable optical attenuator (144) to adjust the attenuation level of the camera (136) to a second attenuation level, the second attenuation level having a higher attenuation than the first attenuation level;
receive at least one in-weld image of the build plane (112) captured by the camera (136) after the attenuation level of the camera (136) is set to the second attenuation level;
receive a weld off signal from the apparatus (130) indicating an end of exposure of the layer of the component (134) on the build plane (112) to the energy beam (132);
upon receiving the weld off signal, cause the adjustable optical attenuator (144) to adjust the attenuation level of the camera (136) to a third attenuation level, the third attenuation level having a lower attenuation than the second attenuation level; and
receive a post-weld image of the build plane (112) captured by the camera (136) after the attenuation level of the camera (136) is set to the third attenuation level.

10. The apparatus of claim 9, wherein the camera (136) is a complementary metal-oxide-semiconductor (CMOS) camera.

11. The apparatus of claim 9, wherein the instructions further cause the apparatus (130) to cause a light source (152) to illuminate the build plane (112).

12. The apparatus of claim 9, wherein the instructions further cause the apparatus to:
cause a light source (152) to illuminate the build plane (112) after receiving the powder applied signal;
cause the light source (152) to stop illuminating the build plane (112) after receiving the weld on signal; and
cause the light source (152) to illuminate the build plane (112) after receiving the weld off signal.

13. The apparatus of claim 9, wherein the adjustable optical attenuator (144) comprises an electronically controlled optical attenuator.

14. The apparatus of claim 9, wherein the adjustable optical attenuator (144) comprises a filter wheel, having two different filters, configured to be rotated in front of a lens of the camera (136).

15. The apparatus of claim 9, wherein the adjustable optical attenuator comprises an adjustable light polarizer (170).
